# EUROPEAN PATENT APPLICATION

(11) **EP 1 703 486 A2**
(43) Date of publication of application: **20.09.2006**
(21) Application number: 06003140.8
(22) Date of filing: 16.02.2006
(51) Int. Cl.: G09G 3/28

(54) **Plasma display device and operating method of the same**

(30) Priority: 16.03.2005 KR 2005021904
(71) Applicant: LG Electronics Inc., Yongdungpo-gu Seoul (KR)
(72) Inventor: Young, Joon Ahn, Gumi-si Kyungsangbuk-do 730-784 (KR); Sang, Kook Lee, Kyungsangbuk-do 730-041 (KR)
(74) Representative: Katérle, Axel

(57) **Abstract**

There is provided a plasma display device which can improve a brightness characteristic and a driving method thereof, where a screen load is detected and a rising time or a falling time of a sustain pulse changes depending on the detected screen load. A rising time or a falling time of a sustain pulse is extended when the screen load is large, compared to when the screen load is small. Therefore, brightness and discharge efficiency of a plasma display device can be enhanced when the screen load is large and a voltage margin can be enhanced while having a stable brightness characteristic when the screen load is small, so that a picture quality characteristic can be improved while enhancing driving efficiency of a plasma display panel.

## Description

### BACKGROUND OF THE INVENTION

### Field of the Invention

A plasma display device displays an image including a character or a graphic by allowing a phosphor to emit light by ultraviolet rays of 147nm generating upon discharging of He+ Xe, Ne+ Xe, and He+Ne+Xe gas. Such a plasma display device can be easily manufactured in flat and large and provides a greatly improved image quality thanks to the recent technical development.

A three-electrode AC surface-discharge plasma display device has three electrodes in each discharge cell, lowers a voltage required for discharge using wall charges accumulated on a surface upon discharging, and protects electrodes from sputtering generated by discharge, so that it has an advantage of a low voltage drive and a long lifetime.

Such a plasma display device performs sustain discharge by selecting a discharge cell by address discharge and applying a sustain pulse with the selected discharge cell, so that an image is displayed.

The present invention relates to a plasma display device which can improve an afterimage by adjusting a rising time or a falling time of a sustain pulse applied to the discharge cell depending on a screen load and enhance efficiency of the plasma display device, and a driving method thereof.

### Description of the Background Art

A plasma display device generates discharge between a plurality of address electrodes (X) disposed in a column direction and a plurality of scan electrodes (Y) and sustain electrodes (Z) disposed in a row direction, thereby displaying a screen.

In order to embody a gray scale of an image, the plasma display device divides one frame into several subfields having different light emitting number and driven. At this time, each subfield is divided into a reset period (R) for uniformly generating discharge, an address period (A) for selecting a discharge cell, and a sustain period (S) for embodying a gray scale depending on the number of discharge.

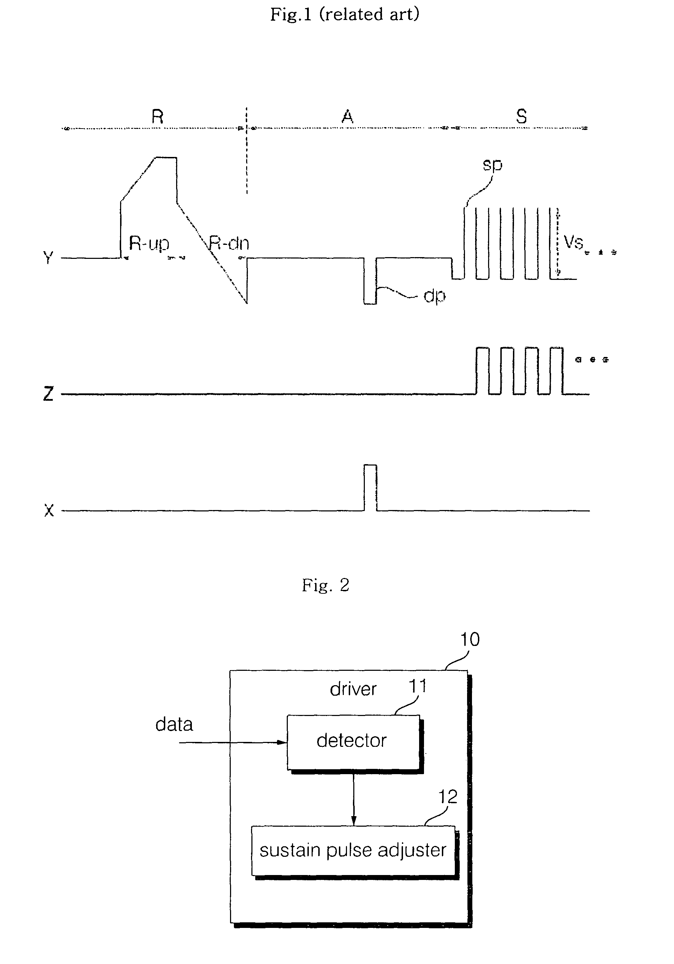

A general plasma display device generates a driving waveform shown in FIG. 1, applies the driving waveform to the electrode provided above, and drives a plasma display panel.

That is, during a reset period (R), reset discharge is generated by applying a high voltage of 250V or more to all discharge cells to initialize a discharge cell. When the reset discharge occurs, wall charges are accumulated in a dielectric layer on the scan electrode (Y) and the sustain electrode (Z). Thereafter, when a voltage of a negative (-) polarity is supplied, wall charges within the discharge cell are erased and an operation margin of a driving circuit is secured.

During an address period (A), a data pulse of a positive (+) polarity is applied to the address electrode (X) depending on image data and a scan pulse of a negative (-) polarity is supplied to the scan electrode (Y) to be opposite to the data pulse. Address discharge is generated by a voltage difference between the data pulse and the scan pulse in a cell to which the data pulse is applied.

During a sustain period (S), a sustain pulse (sp) is alternatively supplied to the scan electrode (Y) and the sustain electrode (Z) and when the sustain pulse (sp) is supplied to a cell in which the address discharge occurs, sustain discharge occurs and thus a screen is displayed.

At this time, because the number of the sustain pulse (sp) applied during a sustain period of each subfield changes, the number of discharge generated during a sustain period of each subfield changes.

Therefore, because discharge generated in the each subfield is accumulated, a screen is displayed in a plasma display device.

When a screen is displayed, if a screen load is in a range of over 40 to 50% of full white, there is a problem that an excess current flows in a driver provided to apply an address pulse or a sustain pulse (sp).

In order to prevent generation of an excess current, a plasma display device is driven by reducing the number of sustain pulses (sp) applied to the scan electrode (Y) or the sustain electrode (Z).

In this case, because a current flowing to a device provided in the driver is reduced, generation of an excess current is controlled, but discharge efficiency and brightness of a plasma display device are reduced.

### SUMMARY OF THE INVENTION

Accordingly, an object of the present invention is to solve at least the problems and disadvantages of the background art.

An object of the present invention is to provide a plasma display device which can enhance discharge efficiency and improve an afterimage and brightness by adjusting a rising time or a falling time of a sustain pulse in driving a plasma display panel.

Another object of the present invention is to provide a plasma display device which can secure discharge efficiency and brightness although a screen load is large by extending a rising time or a falling time of a sustain pulse applied during a sustain period when a screen load is large, compared to when a screen load is small, and a driving method thereof.

According to an aspect of the present invention, there is provided a plasma display device comprising: a first electrode and a second electrode formed in an upper substrate; and a driver applying a sustain pulse to the first electrode and the second electrode; wherein the driver alternatively applies a sustain pulse to the first electrode and the second electrode during a sustain period and changes a rising time or a falling time of the sustain pulse by comparing a screen load with a predetermined reference value.

At this time, the driver may detect a displayed screen load and enhance discharge efficiency by adjusting a rising time or a falling time of the sustain pulse to be long when the displayed screen load is a predetermined reference value or more, compared to when the screen load is less than the reference value.

According to another aspect of the present invention, there is provided a driving method of a plasma display device, the method comprising: a sustain period alternatively applying a sustain pulse to the first electrode (Y) and the second electrode (Z), wherein a rising time or a falling time of the sustain pulse is adjusted by comparing a screen load with a predetermined reference value.

A rising time or a falling time of the sustain pulse may be adjusted to be long when the screen load is the reference value or more, compared to when the screen load is less than the reference value and a rising time or a falling time of the sustain pulse is adjusted in at least one subfield.

When a rising time or a falling time of a sustain pulse is shortened, a resistance of an internal element of a plasma display device is reduced and damage due to discharge can be reduced. When a rising time or a falling time of a sustain pulse is shortened, a luminescent spot characteristic can be improved by reducing a difference of wall charges between a cell in which discharge occurs and a cell in which discharge does not occurs.

Therefore, as a rising time or falling time of the sustain pulse is extended when a screen load is large and a rising time or a falling time of the sustain pulse is shortened when the screen load is small, an afterimage and brightness of a plasma display device are improved, so that an image quality characteristic can be enhanced.

### BRIEF DESCRIPTION OF THE DRAWINGS

The invention will be described in detail with reference to the following drawings in which like numerals refer to like elements.
FIG. 1 is a diagram illustrating a driving waveform driving a conventional plasma display panel;
FIG. 2 is a diagram illustrating a construction of a conventional plasma display device;
FIG. 3a is a diagram illustrating a sustain pulse applied when an image load is large;
FIG. 3b is a diagram illustrating a sustain pulse applied when an image load is small;
FIG. 4 is a flowchart illustrating a first embodiment of a driving method of a plasma display device according to the present invention;
FIG. 5 is a flowchart illustrating a second embodiment of a driving method of a plasma display device according to the present invention;
FIG. 6a is a diagram illustrating a sustain pulse applied when a screen load by the second embodiment of the driving method of the plasma display device according to the present invention is a first reference value or more;
FIG. 6b is a diagram illustrating a sustain pulse applied when a screen load by the second embodiment of the driving method of the plasma display device according to the present invention is less than a first reference value or a second reference value or more;
FIG. 6c is a diagram illustrating a sustain pulse applied when a screen load by the second embodiment of the driving method of the plasma display device according to the present invention is less than a second reference value;
FIG. 7a is a diagram illustrating a sustain pulse applied to a first subfield to a sixth subfield; and
FIG. 7b is a diagram illustrating a sustain pulse applied to a seventh subfield to a ninth subfield.

### DETAILED DESCRIPTION OF PREFERRED EMBODIMENTS

Hereinafter, exemplary embodiments of a plasma display device and a driving method thereof according to the present invention will be described in detail with reference to the accompanying drawings. There are many exemplary embodiments of a plasma display device and a driving method thereof according to the present invention and hereinafter, the most preferable embodiment will be described. However, a basic structure of the plasma display device and the driving method thereof is the same as that of the above-mentioned prior art and thus detailed description thereof will be omitted.

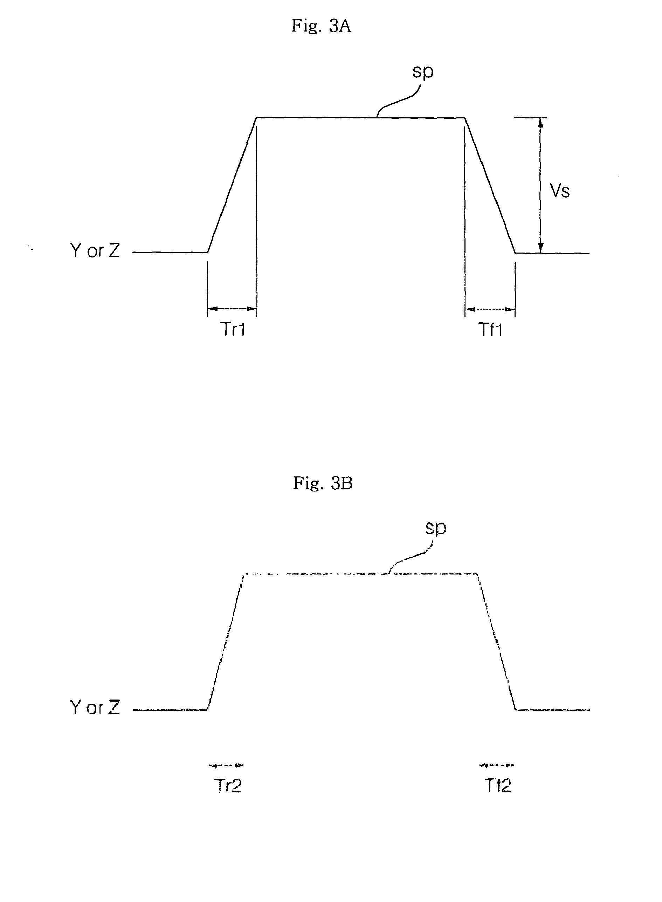

FIG. 2 shows a construction of a conventional plasma display device and FIG. 3a or 3b shows a sustain pulse according to a first embodiment of the present invention. First, a plasma display device according to the present invention will be described with reference to FIG. 2.

A general three-electrode surface-discharge plasma display device has a first electrode and a second electrode in an upper substrate, a third electrode in a lower substrate and generates discharge by applying a voltage to the first electrode, the second electrode, and the third electrode, so that a screen is displayed. In this specification, the first electrode and the second electrode provided in an upper substrate of a three-electrode surface-discharge plasma display device is referred to as "a scan electrode (Y) and a sustain electrode (Z)" and the third electrode provided in a lower substrate thereof is referred to as "an address electrode (X)".

In order to express a gray scale, a plasma display device according to the embodiment of the present invention divides one frame into one subfield or more having different numbers of discharge and driven in a time division manner.

The subfield includes a reset period for initializing a discharge cell, an address period for selecting an on-cell, and a sustain period for generating sustain discharge in the on-cell.

During the reset period, a high voltage as a signal equally applied to all cells regardless of turning on/off a cell, is applied to the scan electrode (Y) to make all cells to be in the same state.

During the address period, in an on-cell in which discharge is generated, address discharge is generated by applying opposite voltages to the scan electrode (Y) and the address electrode (X).

During the sustain period, discharge occurs in a cell in which address discharge occurs by alternatively applying a sustain pulse (sp) having a phase difference of 180° to the scan electrode (Y) and the address electrode (X).

When a screen load generally changes, brightness of a screen to be displayed can be changed even under the same voltage or current. Because strong discharge occurs when a screen load is small, compared to when a screen load is large, a brightness characteristic is deteriorated when the screen load is large, compared to when a screen load is small.

Therefore, a plasma display device according to the present invention alternatively applies a sustain pulse (sp) to the scan electrode (Y) and the sustain electrode (Z) during a sustain period and includes a driver 10) for changing rising times (Tr1 and Tr2) or failing times (Tf1 and Tf2) of the sustain pulse (sp) by comparing a screen load with a predetermined reference value.

The driver 10 includes a detector 11 detecting the displayed screen load. Briefly speaking, a screen load means a ratio of on-cells to all discharge cells and an on-cell indicates a turned-on discharge cell and indicates a turned-off discharge cell.

Therefore, the detector 11 detects a screen load through the number of on-cells in which discharge occurs to an entire screen. That is, because sustain discharge occurs in the discharge cell if a data pulse is applied to the discharge cell during the address period, the detector 11 detects a screen load through the number of cells to which a data pulse is applied.

In addition, in the detector 11, it is assumed that a current consumed when an entire screen is in full white is 100% and a screen load may be detected with a ratio of a current consumed when a screen is displayed depending on image data currently inputted.

The driver 10 includes a sustain pulse adjuster 12 for adjusting rising times (Tr1 and Tr2) or falling times (Tf1 and Tf2) of the sustain pulse (sp) by comparing a detected screen load with a predetermined reference value.

In general, when driving a plasma display device, an active current used upon discharging is not reduced, but a reactive current applied to the scan electrode (Y) and the sustain electrode (Z) for discharge is recovered and stored to a capacitor and a consumption power is reduced by reusing when a sustain pulse (sp) is applied to the scan electrode (Y) and the sustain electrode (Z).

That is, a sustain voltage (Vs) should be applied to generate discharge to the scan electrode (Y) and the sustain electrode (Z) and a current recovered to the capacitor is applied to the scan electrode (Y) and the sustain electrode (Z) and only an insufficient amount when compared with a sustain voltage (Vs) is supplied through an external power.

When the sustain pulse (sp) is applied to the scan electrode (Y) and the sustain electrode (Z), the recovered current is used in an initial stage. At this time, if a time rising up to a sustain voltage (Vs), i.e., a rising time (Tr2) of a sustain pulse is shortened, a sustain time of a sustain voltage (Vs) is extended, thereby increasing a voltage margin. On the contrary, brightness can be enhanced if a rising time (Tr1) of a sustain pulse is extended.

The sustain pulse adjuster 12 enhances a brightness characteristic and efficiency of a plasma display device by adjusting rising times (Tr1 and Tr2) or falling times (Tf1 and Tf2) of the sustain pulse depending on a screen load detected from the detector 11.

The sustain pulse adjuster 12 adjusts to extend rising times (Tr1 and Tr2) or falling times (Tf1 and Tf2) of the sustain pulse when the detected screen load is a predetermined reference value or more, compared to when the screen load is less than the reference value.

At this time, it is preferable that the reference value is set to a predetermined value within a range of 40% to 60% of an entire screen load.

If a screen load of an input signal is in a range of 40% to 60%, brightness of the displayed screen is remarkably deteriorated. Therefore, the sustain pulse controller 12 sets the reference value to 50%, adjusts a rising time (Tr1) or a falling time (Tf1) of the sustain pulse to be long if the detected screen load is in a range of 50% or more, and a rising time (Tr2) or a falling time (Tf2) of the sustain pulse to be short if the detected screen load is in a range of less than 50%.

For example, the sustain pulse adjuster 12 adjusts a rising time (Tr1) of the sustain pulse to be 500ns when a screen load is 50% or more, as shown in FIG. 3a and a rising time (Tr2) of the sustain pulse to be 340ns when a screen load is less than 50%, as shown in FIG. 3b.

The sustain pulse adjuster 12 can adjust rising times (Tr1 and Tr2) or falling times (Tf and Tf2) of the sustain pulse only in a specific subfield.

As the number of a sustain pulse (sp) applied during one subfield increases, it has an influence on brightness and efficiency characteristic. Therefore, the sustain pulse adjuster 12 can adjust rising times (Tr1 and Tr2) or falling times (Tf1 and Tf2) of the sustain pulse only in a subfield in which the number of the sustain pulse (sp) applied during one subfield is large.

As a rising time (Tr1) of a sustain pulse is extended, a rising slope of the sustain pulse becomes smooth. As the rising time (Tr1) of the sustain pulse is extended, a current recovered to the capacitor can be sufficiently used, thereby decreasing a resistance of internal elements and thus reducing damage due to discharge, so that discharge efficiency and brightness can be enhanced.

On the contrary, as a rising time (Tr2) of a sustain pulse is shortened, a rising slope of a sustain pulse becomes sharp. As a rising time (Tr2) of a sustain pulse is shortened, a voltage margin is improved and thus sustain discharge can occur even under a low voltage.

Specifically, when driving a plasma display device, one frame period is set and thus many subfields should be driven during the same sustain time in order to express more natural gray scale.

Therefore, if a rising time (Tr2) of a sustain pulse is shortened when a screen load is small, a sustain pulse can be applied several times while sufficiently securing the smallest discharge margin for sustaining discharge during the same sustain period, so that a margin is improved.

Although a rising time (Tr2) of the sustain pulse is shortened when a screen load is small, discharge can be sufficiently performed and thus a charged particle between an off-cell in which discharge does not occur and an on-cell in which discharge occurs moves less and a difference of wall charges between the off-cell and the on-cell can be reduced, so that an afterimage and a luminescent spot characteristic can be enhanced.

In this way, although only a rising time (Tr1 or Tr2) of the sustain pulse changes, a picture quality improvement effect such as enhancement of brightness of a display screen is obtained, but a falling time (Tf1 or Tf2) of the sustain pulse can also increase a picture quality improvement effect by changing like the rising time.

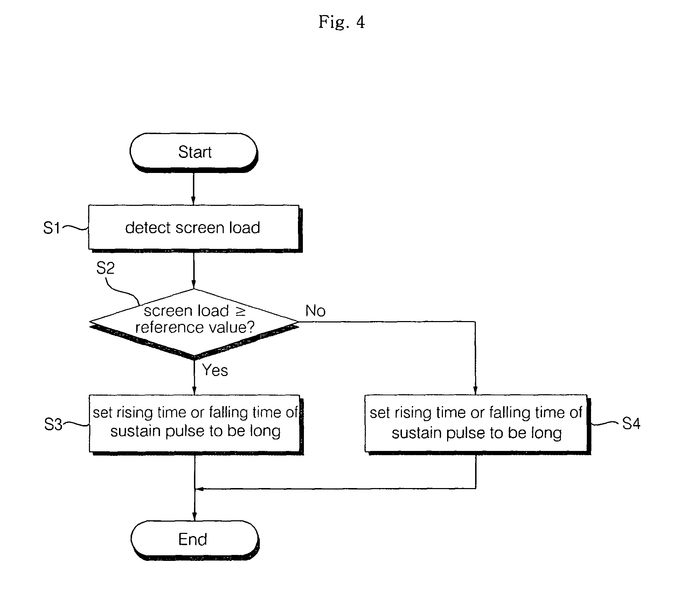

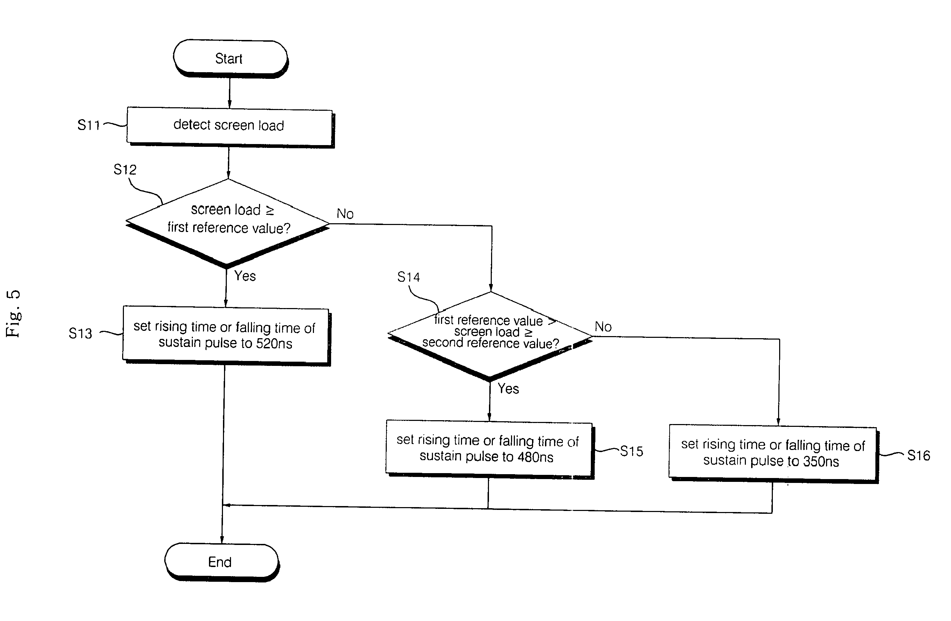

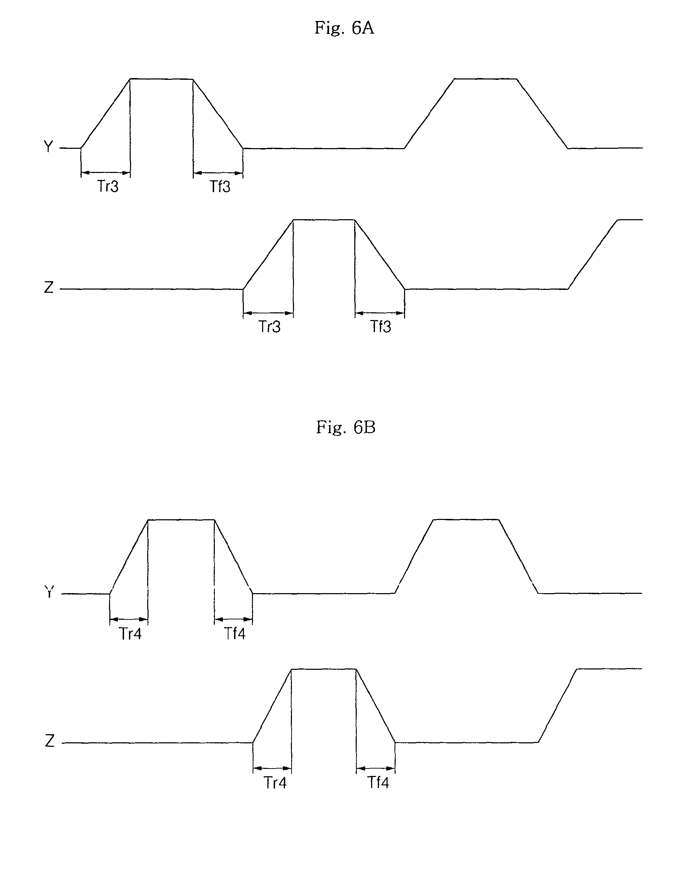

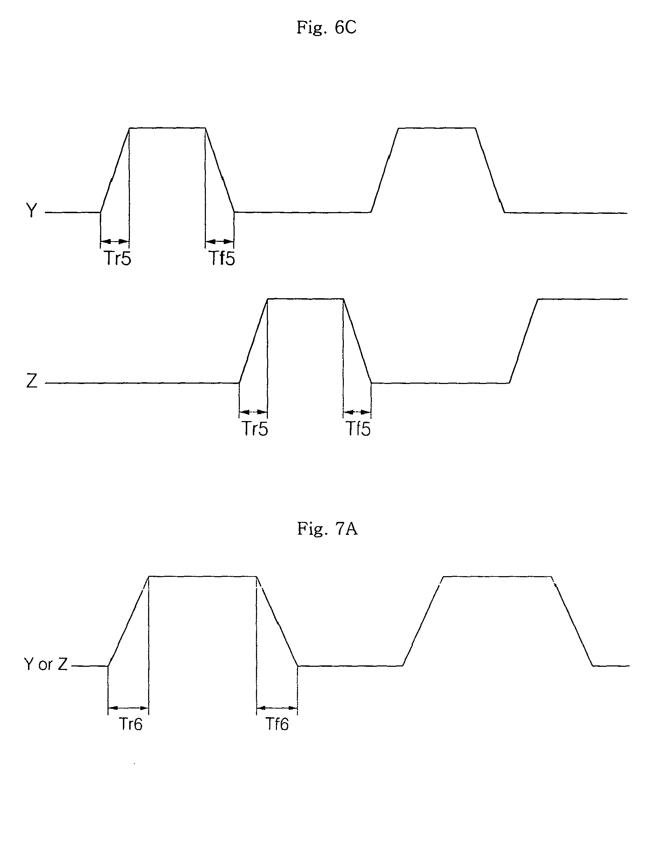

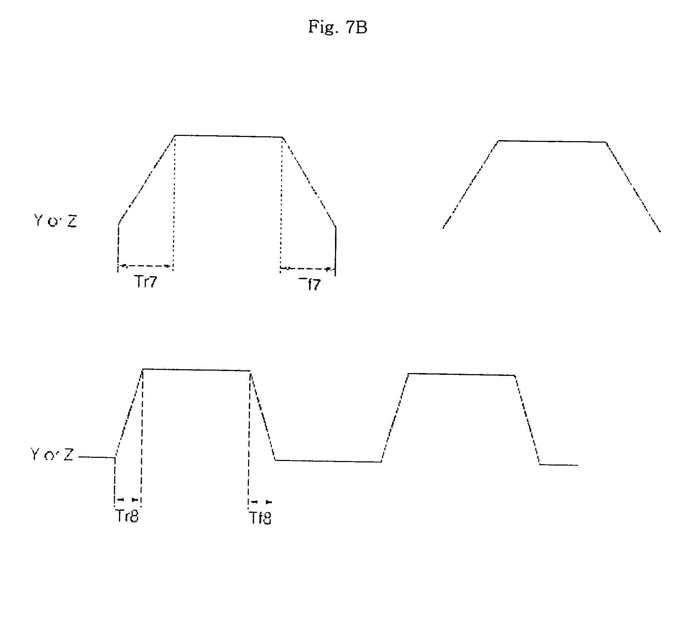

A driving method of a plasma display device having the above-mentioned construction will be described with reference to the drawings. FIG. 4 or 5 is a flowchart illustrating a first embodiment or a second embodiment of a driving method of a plasma display device according to the present invention. FIG. 6a to 6c is a diagram illustrating a sustain pulse applied depending on a screen load by the second embodiment of the driving method of the plasma display device according to the present invention. FIG. 7a is a diagram illustrating a sustain pulse applied to a first subfield to a sixth subfield and FIG. 7b is a diagram illustrating a sustain pulse applied to a seventh subfield to a ninth subfield.

First, a screen load is detected (S1). A screen load means the number of on-cells to all pixels of a screen. That is, a screen load is 100% when all pixels of an entire screen are on-cells and a screen load is 50% when all pixels thereof are off-cells. At this time, an on-cell means a cell having 255 gray scales based on 256 gray scales (0 gray scale to 255 gray scales).

In addition, when all cells of the entire screen have 255 gray scales based on 256 gray scales, a consumed current is 100% and when all cells of the entire screen have 0 gray scale, a consumed current is 0% and a ratio of a consumption current to input image data can be referred to as "a screen load."

Therefore, the screen load can be determined by checking the number of cells which are turned on during one frame and be calculated by comparing a current consumed in a current frame to a current consumed in a full white state in which an entire screen has 255 gray scales.

Thereafter, rising times (Tr1 and Tr2) or falling times (Tf1 and Tr2) of a sustain pulse is set by comparing the detected screen load with a predetermined reference value.

When the screen load is a predetermined reference value or more (S2), the rising time (Tr1) or the falling time (Tr1) of the sustain pulse is extended (S3) and when the screen load is a predetermined reference value or less (S2), a rising time (Tr2) or a falling time (Tf2) of the sustain pulse is shortened (S4).

In this case, as the rising time (Tr1) or the falling time (Tf1) of the sustain pulse is extended, a width sustaining the highest voltage of the sustain pulse (sp) is shortened.

If the rising time (Tr2) of the sustain pulse is much shortened, an energy recovery efficiency is lowered and a brightness characteristic is reduced and if the rising time (Tr2) of the sustain pulse is much extended, a highest voltage sustain width of a sustain pulse (sp) is shortened, thereby reducing discharge efficiency, so that rising times (Tr1 and Tr2) of the sustain pulse is adjusted not to be much extended.

Preferably, when the screen load is the reference value or more, the rising time (Tr1) or the falling time (Tf1) of the sustain pulse is set to be in a range of 480ns to 650ns.

In addition, when the screen load is less than the reference value, the rising time (Tr2) or the falling time (Tf2) of the sustain pulse is adjusted to be shortened and the rising time (Tr2) or the falling time (Tf2) of the sustain pulse is adjusted not to exceed 500ns.

At this time, the reference value is set so that a ratio of on-cells to all cells is in a range of 40% to 60% or to be in a range of 40% to 60% of a current consumed when it is in a full white, this can be set to be different depending on a method of detecting a screen load at the first step.

For example, the reference value is set to 50%. If the reference value is set to 50%, the rising time (Tr1) of the sustain pulse is set to be 500ns when the screen load is 50% or more, as shown in FIG. 3a and the rising time (Tr2) of the sustain pulse is set to be 340ns when the screen load is less than 50%, as shown in FIG. 3b.

A rising time or a falling time of the sustain pulse is generally set to be in a range of 480ns to 540ns. Therefore, if rising times (Tr1 and Tr2) or falling times (Tf1 and Tf2) of the sustain pulse are set as described above, brightness characteristic and efficiency are improved in a screen in which a screen load is large and a voltage margin can be improved in a screen in which a screen load is small.

The reference value is set to plural and a rising time (Tr3 or Tr5) or a falling time (Tf3 or Tf5) of the sustain pulse can be used by variously setting depending on the reference value. That is, as the screen load detected at the first step increases, the rising time (Tr3 or Tr5) or the falling time (Tf3 or Tf5) of the sustain pulse can be set to be long.

As shown in FIG. 5, the screen load is first detected (S11) and when the screen load is the first reference value or more (S12), the rising time (Tr3) or the falling time (Tf3) of the sustain pulse is adjusted to be long (S13), compared to when the screen load is less than the first reference value.

When the screen load is less than the first reference value (S12) and is the second reference value or more (S14) which is lower than the first reference value, the rising time (Tr4) or the falling time (Tf4) of the sustain pulse is adjusted to be long (S15), compared to when the screen load is less than the second reference value (S14).

Finally, when the screen load is less than the second reference value (S14), a rising time (Tr5) or a falling time (Tf5) of the sustain pulse is adjusted (S16).

That is, the rising time (Tr3 or Tr5) or the falling time (Tf3 or Tf5) of the sustain pulse changes depending on the screen load. As a reference value for adjusting the rising time (Tr3 or Tr5) or the falling time (Tf3 or Tf5) of the sustain pulse is set to the rising time (Tr3 or Tr5) or the falling time (Tf3 or Tf5) of the sustain pulse adjusted at the second step can be set as in FIG. 6a to 6c.

For example, it is assumed that a reference value for adjusting the rising time (Tr3 or Tr5) or the falling time (Tf3 or Tf5) of the sustain pulse is set to 30% and 60%, respectively. Because the first reference value is set to 60% and the second reference value is set to 30%, the rising time (Tr3 or Tr5) or the falling time (Tf3 or Tf5) of the sustain pulse is adjusted when a screen load is in a range of 0 to 30%, 30 to 60%, and 60 to 100%, at the second step.

That is, as shown in FIG. 6a, if the screen load is the first reference value or more, the rising time (Tr3 or Tr5) or the falling time (Tf3 or Tf5) of the sustain pulse is set to 520ns.

If the screen load is less than the first reference value and the second reference value or more, a rising time (Tr4) or a falling time (Tf4) of the sustain pulse is set to 480ns, as shown in FIG. 6b.

Finally, as shown in FIG. 6c, when a screen load detected at the first step is less than the second reference value, the rising time (Tr5) or the falling time (Tf5) of the sustain pulse is set to 350ns.

If the reference value is set to plural and the rising time (Tr3 or Tr5) or the falling time (Tf3 or Tf5) of the sustain pulse is adjusted depending on a screen load, a brightness characteristic and efficiency and afterimage improvement effects can further be enhanced.

As the set reference value increases, the rising time (Tr3 or Tr5) or the falling time (Tf3 or Tf5) of the sustain pulse becomes various, so that an improvement effect of a picture quality characteristic is obtained.

As the screen load increases, the brightness decreases. Therefore, it is preferable that if the screen load increases, the rising time (Tr3 or Tr5) or the falling time (Tf3 or Tf5) of the sustain pulse increases and if the screen load decreases, the rising time (Tr3 or Tr5) or the falling time (Tf3 or Tf5) of the sustain pulse decreases.

An afterimage is generated by a difference of wall charges between an on-cell in which discharge occurs and an off-cell in which discharge does not occur. Therefore, although the rising time (Tr3 or Tr5) of the sustain pulse is shortened when the screen load is small, discharge can be sufficiently performed, so that charged particles move less and a difference of wall charges between the on-cell and the off-cell can be reduced. Therefore, it is possible to improve a bright afterimage generated when a screen of a high gray scale is displayed after a screen of a low gray scale is displayed.

In order to display one frame, eight or more subfields are generally used. As a sustain pulse is applied to the scan electrode (Y) and the sustain electrode (Z) during each subfield, a gray scale is expressed depending on the number of discharge.

That is, as a weight of a subfield is large, the number of the sustain pulse (sp) applied during one subfield increases and as the number of the sustain pulse (sp) increases, a gray scale embodied by sustain discharge increases.

Because a subfield having many maximum discharge number due to many sustain pulses applied during one subfield period is much affected by a rising time or a falling time of the sustain pulse, rising times (Tr7 and Tr8)) or falling times (Tf7 and Tf8) of subfield pulses (sp2 and sp3) are adjusted only during some subfield periods having many maximum discharge number at the second step.

It is assumed that total ten subfields are used during one frame period.

As shown in FIG. 7a, in the first subfield to the sixth subfield in which the number of the applied sustain pulse (sp1) is relatively small, a rising time (Tr6) or a falling time (Tf6) of the sustain pulse (sp1) is set to 500ns and the same sustain pulse (sp1) is used regardless of a change of a screen load.

However, as shown in FIG. 7b, in the subfield in which the number of the applied sustain pulses (sp2 and sp3) is relatively large, rising times (Tr7 and Tr8) or falling times (Tf7 and Tf8) of the sustain pulses (sp2 and sp3) are adjusted depending on the screen load.

Specifically, in a subfield having many maximum discharge number, because sustain pulses are applied several times during a short time, the number of discharge generated during a subfield period increases. Therefore, when a screen load is small, if a rising time (Tr8) or a falling time (Tf8) of a sustain pulse (sp3) is shortened, the sustain pulse (sp3) can be stably applied several times during the same time.

At this time, in a subfield having many maximum discharge number, the sustain pulse (sp1) should be quickly alternately applied to the scan electrode (Y) and the sustain electrode (Z), so that a rising time (Tr6) or a falling time (Tf6) of the sustain pulse can not be much shortened. In addition, in a next frame, there is high probability in which a flicker or a luminescent spot is generated, so that it is preferable to use the sustain pulse (sp1), as shown in FIG. 7a.

In a driving method of the plasma display device, a rising time or a falling time of a sustain pulse can be adjusted only in a specific subfield and preferably, rising times (Tr7 and Tr8) or falling times (Tf7 and Tf8) of a sustain pulse changes in at least one subfield among other subfields except a last subfield constituting one frame.

Furthermore, in a driving method of the plasma display device, a rising time or a falling time of at least one subfield pulse among sustain pulses constituting one subfield can be adjusted.

That is, even in the same subfield, as a sustain pulse having various rising times or falling times uses, it is possible to compose a sustain pulse for securing a stable picture quality characteristic.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A plasma display device comprising:
a first electrode and a second electrode formed in an upper substrate; and
a driver applying a sustain pulse to the first electrode or the second electrode ;
wherein the driver alternatively applies a sustain pulse to the first electrode and the second electrode during a sustain period and changes a rising time or a falling time of the sustain pulse by comparing a screen load with a predetermined reference value.

2. The plasma display device of claim 1 wherein the driver comprises a detection unit detecting a displayed screen load.

3. The plasma display device of claim 2, wherein the driver further comprises a sustain pulse adjuster adjusting a rising time or a falling time of the sustain pulse by comparing the detected screen load with a predetermined reference value.

4. The plasma display device of claim 3, wherein the sustain pulse adjuster adjusts a rising time or a falling time of the sustain pulse to be long when the screen load is the reference value or more, compared to when a screen load is less than the reference value.

5. The plasma display device of claim 1, wherein the reference value is a predetermined value of a range of 40% to 60% of an entire screen load.

6. The plasma display device of claim 1, wherein the sustain pulse adjuster adjusts a rising time or a falling time of the sustain pulse of a specific subfield.

7. A driving method of a plasma display device, the method comprising:
a sustain period alternatively applying a sustain pulse to a first electrode and a second electrode,
wherein a rising time or a falling time of the sustain pulse is adjusted by comparing a screen load with a predetermined reference value.

8. The driving method of claim 7, wherein the screen load is measured by checking the number of cells which are turned on during one frame.

9. The driving method of claim 7, wherein the screen load is measured by comparing a current consumed in a current frame with a current consumed when the screen is in full white.

10. The driving method of claim 7, wherein the reference value is set so that a ratio of turned-on cells to all cells is in a range of 40% to 60%.

11. The driving method of claim 7, wherein the reference value is set to be in a range of 40% to 60% of a current consumed when the screen is in full white.

12. The driving method of claim 7, wherein a rising time or a falling time of the sustain pulse is adjusted to extend when a screen load is the reference value or more, compared to when a screen load is less than the reference value.

13. The driving method of claim 7, wherein as a rising time or a falling time of the sustain pulse extends, a width sustaining a highest voltage of the sustain pulse is shortened.

14. The driving method of claim 7, wherein a rising time or a falling time of the sustain pulse is adjusted to be longer than 480ns when the screen load is the reference value or more.

15. The driving method of claim 7, wherein a rising time or a falling time of the sustain pulse is adjusted to be smaller than 500ns when the screen load is less than the reference value.

16. The driving method of claim 7, wherein a rising time or a falling time of the sustain pulse is adjusted only in a specific subfield.

17. The driving method of claim 7, wherein a rising time or a falling time of the sustain pulse is adjusted in at least one subfield among other subfields except a last subfield constituting one frame.

18. The driving method of claim 7, wherein a rising time or a falling time of at least one sustain pulse among sustain pulses constituting one subfield is adjusted.

19. The driving method of claim 7, wherein the reference value is set to at least one.

20. The driving method of claim 19, wherein a rising time or a falling time of the sustain pulse is adjusted to extend when the screen load is the first reference value or more, compared to when the screen load is less than the first reference value and a rising time or a falling time of the sustain pulse is adjusted to extend when the screen load is less than the first reference value and a second reference value or more which is lower than the first reference value, compared to when a screen load is less than the second reference value.
